# EUROPÄISCHE PATENTSCHRIFT

(11) **EP 0 665 402 B1**
(45) Veröffentlichungstag und Bekanntmachung des Hinweises auf die Patenterteilung: **17.06.1998**
(21) Anmeldenummer: 95100324.3
(22) Anmeldetag: 12.01.1995
(51) Int. Cl.: F16L 37/088

(54) **Steckkupplung für Druckleitungssysteme**
Plug connector for pressure pipe systems
Connecteur à fiche pour systèmes de conduites sous pression

(30) Priorität: 29.01.1994 DE 9401501 U
(43) Veröffentlichungstag der Anmeldung: 02.08.1995
(73) Patentinhaber: ARMATURENFABRIK Hermann Voss GmbH + Co., D-51679 Wipperfürth (DE)
(72) Erfinder: Berg, Manfred, D-51688 Wipperfürth (DE); Goller, Bernd, D-51688 Wipperfürth (DE)
(74) Vertreter: Patentanwälte Dr. Solf & Zapf

(56) Entgegenhaltungen:
- EP-A- 0 005 865
- AT-B- 294 503
- DE-A- 3 313 859
- DE-A- 3 341 029
- DE-A- 3 424 437
- DE-C- 1 062 499

## Beschreibung

Die vorliegende Erfindung betrifft eine Steckkupplung für Druckleitungssysteme, bestehend aus zwei Kupplungsteilen, und zwar einem Steckerteil und einem Muffenteil, wobei das Steckerteil mit einem Steckerschaft dichtend in eine Aufnahmeöffnung des Muffenteils einsteckbar sowie über ein im wesentlichen ringförmiges, radialelastisch verformbares Halteelement in der Aufnahmeöffnung arretierbar ist, wobei das Halteelement vor dem Steckvorgang derart in einer ersten Ringnut eines der Kupplungsteile vormontiert ist, daß es beim Steckvorgang durch radialelastische Verformung in diese erste Ringnut gedrängt wird und sich dann federnd in eine Arretierstellung zurückverformt, in der es bereichsweise auch in eine zweite Ringnut des anderen Kupplungsteils eingreift, wobei das Halteelement als Formfederklammer mit zwei endseitig über einen Schlitz getrennten und über einen dem Schlitz diametral gegenüberliegenden Ringbereich verbundenen Federarmen ausgebildet ist und wobei die Formfederklammer selbstzentrierend in der ersten Ringnut vormontiert ist, wozu eine Dreipunktanlage am Boden der Ringnut vorgesehen.

Bei einer ersten, durch Vorbenutzung hinlänglich bekannten Steckkupplung ist als Halteelement ein Runddraht-Sprengring in einer äußeren Ringnut des Steckerteils vormontiert. Dieser Sprengring soll sich beim Steckvorgang durch Anlage am Innenumfang der - an der Öffnungsseite zur Bildung eines Einführkonus innen angefasten - Aufnahmeöffnung radialelastisch nach innen in die Steckerschaft-Ringnut verformen, bis er in axialer Richtung in den Bereich einer - dann radial gegenüberliegenden - inneren Ringnut des Muffenteils gelangt und dann durch federelastische Rückverformung (Spreizung) bereichsweise auch in diese Muffenteil-Ringnut eingreift. Diese bekannte Steckkupplung kann aufgrund des Runddraht-Sprengringes nicht zuverlässig von Hand gesteckt werden, weil einerseits sehr hohe Kräfte erforderlich sind, und andererseits wird das Einstecken des Steckers in die Muffe in der Praxis häufig durch den exzentrisch aus der Ringnut verschobenen Sprengring zumindest behindert, wenn nicht sogar unmöglich gemacht. Zudem bewirkt der Sprengring aufgrund seines kreisförmigen Drahtquerschnittes (Längsschnitt in Richtung der Kupplungsachse) aber in der Arretierstellung nachteiligerweise nur relativ geringe Haltekräfte, so daß nicht bei allen beliebigen Anwendungsfällen eine hinreichend sichere Arretierung gewährleistet ist.

Eine gattungsgemäße Steckkupplung ist aus der EP-PS 0 005 865 bekannt. Hierbei ist als Halteelement ein geschlitzter, radialelastischer Haltering in einer inneren Ringnut (Ringkammer) des Muffen- bzw. Gehäuseteils vormontiert, wobei zur Zentrierung des Halterings bezüglich der Kupplungsachse entweder eine Dreipunktanlage zwischen dem Außenumfang des Halteringes und dem Boden der Ringnut oder aber eine umfängliche, kreisförmige Anlage vorgesehen ist. Diese bekannte Steckkupplung hat sich in der Praxis bereits recht gut bewährt, ist aber hinsichtlich der mit dem Haltering erzeugten Haltekräfte nicht für alle Anwendungsfälle gleich gut geeignet.

Die DE-A-33 13 859 beschreibt eine Steckverbindung, die bezüglich des darin beschriebenen Halterings weitgehend dem Stand der Technik gemäß EP-A-0 005 865 entspricht. Auch dabei ist der Haltering im Gehäuse vormontiert, so daß er beim Steckvorgang radial nach außen gespreizt wird.

Der vorliegenden Erfindung liegt die Aufgabe zugrunde, ausgehend von dem beschriebenen Stand der Technik eine gattungsgemäße Steckkupplung zu schaffen, die leicht und sicher auch von Hand steckbar ist, dabei aber auch im gesteckten Zustand gegen hohe Axialkräfte sicher arretiert ist.

Erfindungsgemäß wird dies dadurch erreicht, daß die erste Ringnut von einer äußeren Ringnut des Steckerschaftes gebildet und die Formfederklammer in dieser Ringnut des Steckerschaftes vormontiert ist, wobei zur Selbstzentrierung drei Anlagepunkte zwischen dem Innenumfang der Formfederklammer und dem Boden der Steckerschaft-Ringnut vorgesehen sind, und daß der die zwei Federarme verbindende Ringbereich der Formfederklammer derart zur Bildung eines Federgelenks verjüngt ist, daß beim Steckvorgang die beiden Federarme im wesentlichen ohne eigene Verformung unter elastischer Verformung im Bereich des Federgelenks bewegt werden, wobei jeder Federarm eine kreisbogenförmige, der Steckerschaft-Ringnut bezüglich deren Innen- und Außendurchmesser im wesentlichen entsprechende Innen- und Außenkontur besitzt, und wobei die Formfederklammer in ihrem beim Steckvorgang radial nach innen in die Steckerschaft-Ringnut hinein elastisch verformten Zustand im Längs- und Querschnitt gesehen zumindest annähernd der Längs- und Querschnittskontur der Ringnut entspricht, so daß die Formfederklammer beim Steckvorgang die Ringnut zumindest über zwei diametral gegenüberliegende Umfangsbereiche von jeweils etwa 120° bis 160°, also insgesamt zumindest etwa 240° bis 320° des Gesamtumfangs von 360°, hinweg ausfüllt. Da die Ringnut vorzugsweise als Rechtecknut mit einem praktisch zylindrischen, zur Kupplungachse koaxialen Boden und zwei dazu senkrechten Nutwandungen ausgebildet ist, besitzt somit erfindungsgemäß auch die Formfederklammer eine im wesentlichen rechteckige Längsschnittkontur (Schnitt in Richtung der Kupplungsachse).

Durch die Erfindung wird somit vorteilhafterweise eine "Maximierung" der für die Höhe der axialen Haltekraft maßgeblichen Querschnittsfläche des Haltelementes erreicht; denn die obere Grenze dieser Querschnittsfläche ergibt sich aus der ringförmigen Querschnittsfläche der beim Steckvorgang das Halteelement aufnehmenden Ringnut, und zwar unter der Voraussetzung, daß der Außenumfang des Steckerschaftes und der Innenumfang der Aufnahmeöffnung zumindest annähernd - abgesehen von einem gerade zum Einstecken erforderlichen Ringspalt - zusammenfallen, d.h. im wesentlichen den gleichen Durchmesser besitzen. Denn das Haltelement muß ja in radialer Richtung vollständig jedenfalls soweit "ausweichen", daß das Muffenteil und das Steckerteil relativ zueinander in axialer Richtung bewegt werden können (Relativbewegung zwischen den Umfangsflächen des Steckerschaftes und der Aufnahmeöffnung).

Im Zusammenhang mit der Erfindung ist es zudem von besonderer Bedeutung, daß die Formfederklammer selbstzentrierend in der Ringnut vormontiert ist, wozu eine Dreipunktanlage am Boden der Ringnut vorgesehen ist. Hierdurch wird - vorteilhafterweise absolut unabhängig von der Einbaulage der erfindungsgemäßen Steckkupplung - sichergestellt, daß die Kupplung leicht von Hand steckbar ist, denn die Formfederklammer ist stets zentrisch bzw. koaxial zur Kupplungsachse positioniert, so daß sie jedenfalls von einem Einführkonus eines der beiden Kupplungsteile in die entsprechende Ringnut "verdrängt" werden kann.

Weitere vorteilhafte Ausgestaltungsmerkmale der Erfindung sind in den Unteransprüchen sowie der folgenden Beschreibung enthalten.

Anhand eines in der Zeichnung veranschaulichten, besonders vorteilhaften Ausführungsbeispiels soll im folgenden die Erfindung näher erläutert werden. Dabei zeigen:
- Fig. 1: einen Axialschnitt durch eine erfindungsgemäße Steckkupplung,
- Fig. 2: eine vergrößerte Draufsicht des Haltelementes der erfindungsgemäßen Steckkupplung in der Schnittebene II-II gemäß Fig. 1 mit Andeutung der verschiedenen Umfangskonturen der Steckkupplung im Arretierungsbereich des Halteelementes, wobei dessen Arretierstellung veranschaulicht ist,
- Fig. 3: eine Draufsicht des erfindungsgemäßen Halteelementes analog zu Fig. 2, jedoch in der radialelastisch verformten Stellung und mit Andeutung nur der Konturen der das Halteelement aufnehmenden Ringnut,
- Fig. 4: zur weitergehenden Erläuterung der erfindungsgemäßen Geometrie des erfindungsgemäßen Halteelementes eine Darstellung analog zu Fig. 2, wobei die völlig entspannte, nicht elastisch verformte Stellung des Halteelementes veranschaulicht ist, und
- Fig. 5: einen Axialschnitt des erfindungsgemäßen Halteelementes in der Schnittebene V-V gemäß Fig. 2.

In den verschiedenen Figuren der Zeichnung sind gleiche Teile stets mit den gleichen Bezugszeichen versehen, so daß jede eventuell nur einmal vorkommende Beschreibung eines Teils analog auch bezüglich der anderen Zeichnungsfiguren gilt, in denen dieses Teil mit dem entsprechenden Bezugszeichen ebenfalls zu erkennen ist.

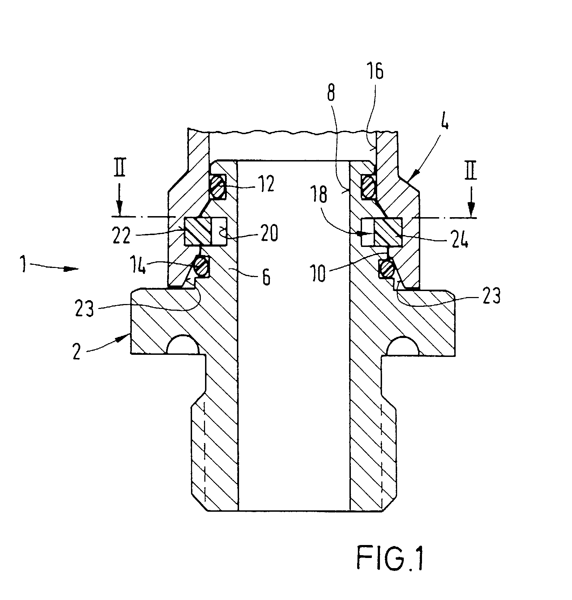

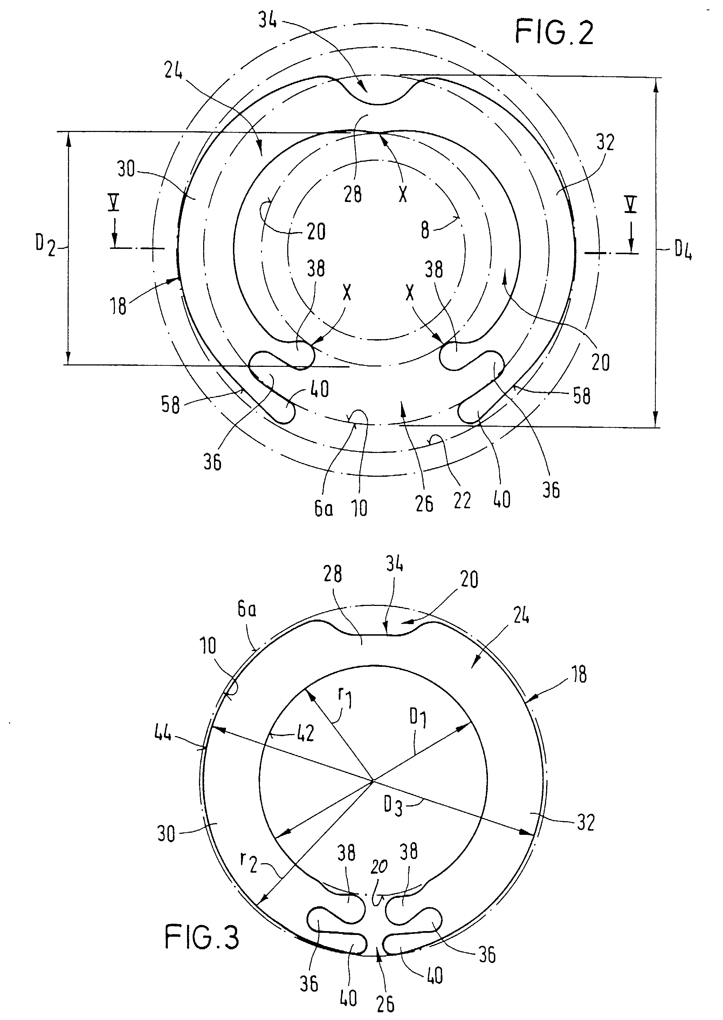

Wie sich zunächst aus Fig. 1 ergibt, besteht eine erfindungsgemäße Steckkupplung 1 aus zwei Kupplungsteilen, nämlich aus einem Steckerteil 2 und einem Muffenteil 4. Das Steckerteil 2 weist mindestens einen im wesentlichen zylindrischen Steckerschaft 6 mit einem axialen Kanal 8 für ein Druckmedium auf, und das Muffenteil 4 besitzt mindestens eine Aufnahmeöffnung 10, in die der Steckerschaft 6 dichtend einsteckbar ist. Der Innenumfang der Aufnahmeöffnung 10 entspricht hierbei etwa dem Außenumfang 6a des Steckerschaftes 6, weshalb in den Fig. 2 und 3 diesbezüglich auch jeweils nur ein Kreis strichpunktiert eingezeichnet ist. Zur umfänglichen Abdichtung sind im dargestellten Ausführungsbeispiel zwei axial versetzte Dichtringe 12, 14 vorgesehen, die in jeweils einer Ringnut des Steckerschaftes 6 lagern. Die Aufnahmeöffnung 10 des Muffenteils 4 geht in einen Druckmittelkanal 16 über, so daß über die Steckkupplung 1 der Kanal 8 des Steckerteils 2 mit dem Druckmittelkanal 16 des Muffenteils 4 verbindbar ist. Insbesondere das Muffenteil 4 kann beliebig als Verteilerkörper, beispielsweise als T-Abzweigstück (nicht näher dargestellt) ausgebildet sein. Das Steckerteil 2 ist im dargestellten Beispiel als Einschraub-Adapter ausgebildet.

Das Steckerteil 2 bzw. der Steckerschaft 6 ist in seiner eingesteckten Lage in der Aufnahmeöffnung 10 durch ein im wesentlichen ringförmiges, radialelastisch verformbares Halteelement 18 arretierbar, welches bevorzugt in axialer Richtung zwischen den beiden Dichtringen 12, 14 angeordnet ist. Dieses Halteelement 18 ist vor dem Einsteckvorgang derart in einer Ringnut eines der Kupplungsteile, und zwar in einer äußeren Ringnut 20 des Steckerschaftes 6, vormontiert, daß es beim Steckvorgang durch radialelastische Verformung in diese Ringnut 20 gedrängt wird (vgl. Fig. 3) und sich dann federelastisch in eine Arretierstellung zurückverformt (vgl. Fig. 1, 2 und 4), in der es bereichsweise auch in eine Ringnut des anderen Kupplungsteils, und zwar erfindungsgemäß in eine innere Ringnut 22 des Muffenteils 4, eingreift. Die elastische Verformung wird zunächst über eine innere, die Aufnahmeöffnung 10 erweiternde, praktisch einen "Einführtrichter" bildende Konusfläche 23 des Muffenteils 4 bewirkt.

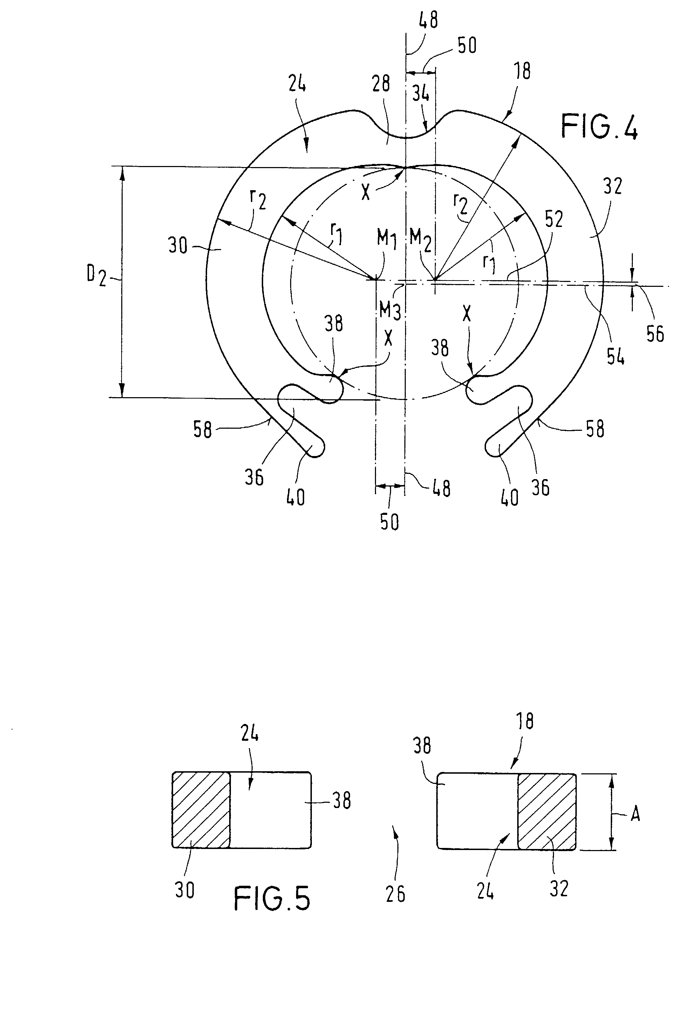

Erfindungsgemäß ist nun das Halteelement 18 als eine - insbesondere einstückig aus Kunststoff (besonders geeignet ist POM = Kurzzeichen für Polyoxymethylen bzw. Polyacetale) bestehende - Formfederklammer 24 ausgebildet und dabei - bezüglich Umfangsverlauf und Längs- und Querschnittsform sowie auch bezüglich des daraus resultierenden elastischen Verformungsverhaltens - derart ausgelegt, daß beim Steckvorgang - vgl. hierzu Fig. 3 - die Formfederklammer 24 die Ringnut 20 nahezu vollständig ausfüllt. Dies bedeutet, daß die Formfederklammer 24 die Ringnut 20 beim Steckvorgang über zumindest annähernd den gesamten Umfang hinweg insbesondere in radialer Richtung, vorzugsweise jedoch auch in axialer Richtung ausfüllt. Die Ringnut 20 ist hierbei vorzugsweise als Rechtecknut mit einem zylindrischen, im Axialschnitt ebenen Boden und zwei dazu senkrechten Nutwandungen ausgebildet (in den Zeichnungsfiguren nicht mit Bezugszeichen versehen). Daher weist auch die erfindungsgemäße Formfederklammer 24 über den größten Teil ihres Umfangs hinweg eine entsprechend rechteckige Schnittkontur auf, was in Fig. 1 und 5 deutlich zu erkennen ist.

Wie sich nun insbesondere aus den Fig. 2 bis 4 ergibt, besteht die Formfederklammer 24 zweckmäßigerweise aus zwei endseitig über einen Schlitz 26 getrennten und über einen dem Schlitz 26 diametral gegenüberliegenden, verjüngten und dadurch ein Federgelenk 28 bildenden Ringbereich miteinander einstückig verbundenen Federarmen 30, 32. Die das Federgelenk 28 bildende Verjüngung wird insbesondere durch eine am Außenumfang gebildete, gemäß Fig. 2 und 4 vorzugsweise konkav kreisbogenförmige Ausnehmung 34 gebildet.Jeder Federarm 30, 32 besitzt vorzugsweise eine kreisbogenförmige, der Ringnut 20 bezüglich deren Innen- und Außendurchmesser im wesentlichen entsprechende Innen- und Außenkontur. Dabei sind aber die Federarme 30, 32 in der entspannten, elastisch unverformten Lage der Formfederklammer 24 (s. Fig. 2 und 4) unter Erweiterung des Schlitzes 26 gespreizt. Während des Einsteckvorganges werden dann die beiden Federarme 30, 32 unter elastischer Verformung im Bereich des Federgelenkes 28 zusammengedrückt, bis sie die in Fig. 3 veranschaulichte, die Nut 20 ausfüllende Lage erreichen. Dabei werden die Federarme 30, 32 selbst praktisch nicht verformt, sondern die Verformung erfolgt in der Hauptsache im Bereich des Federgelenkes 28. Hierdurch haben die Federarme 30, 32 eine außerordentlich hohe Stabilität zur Aufnahme sehr hoher Haltekräfte.

Die die rechteckige Schnittkontur (vgl. Fig. 5) aufweisenden Federarme 30, 32 erstrecken sich ausgehend von dem Federgelenk 28 in Umfangsrichtung zumindest über einen Bereich von jeweils etwa 120° bis 160°.

In einer besonders vorteilhaften Weiterbildung der Erfindung weist jeder Federarm 30, 32 der Formfederklammer 24 in seinem freien Endbereich zwei durch eine sich etwa in Umfangsrichtung in den Federarm 30 bzw. 32 erstreckende, in axialer Richtung durchgehende Schlitzausnehmung 36 gebildete, radialelastisch verformbare Federzungen 38, 40 auf. Im entspannten, elastisch unverformten Zustand der Formfederklammer 24 (vgl. Fig. 2 und 4) sind diese beiden Federzungen 38, 40 jeweils derart in radialer Richtung voneinander weg gespreizt, daß die innere Federzunge 38 in der Ringnut 20 des Steckerschaftes 6 und die äußere Federzunge 40 in der inneren Ringnut 22 des Muffenteils 4 angeordnet sind. Während des Steckvorganges (vgl. Fig. 3) werden die Federzungen 38, 40 unter elastischer Verformung zusammengedrückt sowie in die Nut 20 hineingedrückt. Somit tragen die Federzungen 38, 40 durch ihre Spreizung in der Arretierstellung zu einer weiteren Erhöhung der axialen Haltekraft bei.

Im Zusammenhang mit der Erfindung ist zudem vorgesehen, daß die Formfederklammer 24 selbstzentrierend in der Ringnut 20 vormontiert ist, wozu eine Dreipunktanlage am Boden der Ringnut 20 vorgesehen ist (siehe insbesondere Fig. 2). Da erfindungssgemäß die Formfederklammer 24 in der äußeren Ringnut 20 des Steckerschaftes 6 vormontiert ist, sind für die Selbstzentrierung drei Anlagepunkte X zwischen dem Innenumfang der Formfederklammer 24 und dem Boden der Steckerschaft-Ringnut 20 vorgesehen, und zwar insbesondere ein Anlagepunkt X im Bereich des Federgelenkes 28 und jeweils ein Anlagepunkt X im freien Endbereich jedes Federarms 30, 32, wobei die letztgenannten Anlagepunkte X vorzugsweise jeweils im Bereich der radial inneren Federzunge 38 angeordnet sind. Diese Dreipunktanlage verändert sich jedoch während des Steckvorganges in eine umfangsgemäße, kreislinien- bzw. zylinderflächenförmige Anlage (s. Fig. 3). Dies bedeutet, daß beim Steckvorgang die Formfederklammer 24 einerseits eine im wesentlichen kreisförmige Innenkontur 42 aufweist, deren Durchmesser D₁ zumindest annähernd gleich dem Durchmesser D₂ (s. Fig. 2) des Bodens der Steckerschaft-Ringnut 20 ist. Ferner besitzt die Formfederklammer beim Steckvorgang eine im wesentlichen kreisförmige Außenkontur 44, deren Durchmesser D₃ zumindest annähernd gleich dem Innendurchmesser D₄ der Muffenteil-Aufnahmeöffnung 10 ist. Dabei entspricht der Innendurchmesser D₄ der Aufnahmeöffnung 10 etwa dem Außendurchmesser des Steckerschaftes 6, weshalb in der Zeichnung hierfür nur eine Kreislinie strichpunktiert eingezeichnet ist (Fig. 2 und 3).

Anhand der Fig. 4 soll nun die geometrische Form der erfindungsgemäßen Formfederklammer 24 noch genauer erläutert werden, und zwar ist in Fig. 4 der entspannte, elastisch unverformte Zustand der Formfederklammer 24 veranschaulicht. Jeder Federarm 30, 32 weist eine kreisförmige Innenkontur mit einem Radius r₁ sowie eine kreisförmige Außenkontur mit einem Radius r₂ auf. Der Krümmungsradius r₁ entspricht demjenigen des Bodens der Ringnut 20 des Steckerschaftes 6, und der Krümmungsradius r₂ entspricht der Krümmung der Aufnahmeöffnung 10 des Muffenteils 4 bzw. der äußeren Umfangsfläche des Steckerschaftes 6. Die beiden Radien r₁ und r₂ der beiden Federarme 30, 32 gehen jedoch von zwei verschiedenen Mittelpunkten M₁ und M₂ aus, wobei diese beiden Mittelpunkte M₁ und M₂ jeweils von der Kupplungsachse - in Fig. 4 als Mittelpunkt M₃ eingezeichnetweg versetzt angeordnet sind. Einerseits ist jeder Mittelpunkt M₁ und M₂ ausgehend von einer durch den Mittelpunkt M₃ - und mittig durch das Federgelenk 28 - verlaufenden Symmetrieachse 48 senkrecht zu dieser Symmetrieachse 48 nach außen, d.h. voneinander weg, um einen Versatz 50 versetzt. Andererseits liegen beide Mittelpunkte M₁ und M₂ auf einer Geraden 52, die gegenüber der senkrecht zur Symmetrieachse 48 durch den Mittelpunkt M₃ verlaufenden Gerade 54 um einen Versatz 56 parallel versetzt ist. Dabei sind jeweils der erste Versatz 50 und der zweite Versatz 56 derart ausgelegt, daß nach der radialelastischen Verformung alle Mittelpunkte M₁ bis M₃ praktisch aufeinanderfallen - siehe Fig. 3. Die Innenkontur jedes Federarms 30, 32 erstreckt sich mit dem Radius r₁ vorzugsweise in Richtung des Federgelenkes 28 bis zu der Symmetrieachse 48, so daß die Innenkonturen in diesem Schnittpunkt mit der Symmetrieachse 48 den ersten Anlagepunkt X bilden. In der anderen Umfangsrichtung geht der Innenradius r₁ jedes Federarms 30, 32 über einen kleineren Radius in die innere Federzunge 38 über, so daß sich in diesem Bereich die beiden weiteren Anlagepunkte X ergeben. Außenseitig geht jeder Außenradius r₂ jedes Federarms 30,32 im Bereich der äußeren Federzunge 40 in einen geradlinigen Abschnitt 58 über, wobei die Federzunge 40 aber entsprechend der kreisförmigen Innenkontur der Aufnahmeöffnung 10 verformbar ist (vgl. Fig. 3).

Im folgenden sollen nun noch die wichtigsten Maße der erfindungsgemäßen Steckkupplung 1 beispielhaft angegeben werden, ohne jedoch die Erfindung auf diese realisierte Ausführungsform zu beschränken.

Der Durchmesser des Bodens der Ringnut 20 beträgt etwa 7,8 mm. Hierbei beträgt der erste Versatz 50 bevorzugt etwa 1 mm, und der zweite Versatz 56 liegt in der Größenordnung von etwa 0,1 mm. Hierbei beträgt der Radius r₁ etwa 3,9 mm und der Radius r₂ etwa 5,8 mm. Die in axialer Richtung gemessene Dicke A (vgl. Fig. 5) der Formfederklammer 24 beträgt etwa 2,5 mm.

## Patentansprüche

1. Steckkupplung für Druckleitungssysteme, bestehend aus zwei Kupplungsteilen, und zwar einem Steckerteil (2) und einem Muffenteil (4), wobei das Steckerteil (2) mit einem Steckerschaft (6) dichtend in eine Aufnahmeöffnung (10) des Muffenteils (4) einsteckbar sowie über ein im wesentlichen ringförmiges, radialelastisch verformbares Halteelement (18) in der Aufnahmeöffnung (10) arretierbar ist, wobei das Halteelement (18) vor dem Steckvorgang derart in einer ersten Ringnut (20) eines der Kupplungsteile (2) vormontiert ist, daß es beim Steckvorgang durch radialelastische Verformung in diese erste Ringnut (20) gedrängt wird und sich dann federnd in eine Arretierstellung zurückverformt, in der es bereichsweise auch in eine zweite Ringnut (22) des anderen Kupplungsteils (4) eingreift, wobei das Halteelement (18) als Formfederklammer (24) mit zwei endseitig über einen Schlitz (26) getrennten und über einen dem Schlitz (26) diametral gegenüberliegenden Ringbereich verbundenen Federarmen (30, 32) ausgebildet ist und wobei die Formfederklammer (24) selbstzentrierend in der ersten Ringnut (20) vormontiert ist, wozu eine Dreipunktanlage (X) am Boden der Ringnut (20) vorgesehen ist,
**dadurch gekennzeichnet**, daß die erste Ringnut von einer äußeren Ringnut (20) des Steckerschaftes (6) gebildet und die Formfederklammer (24) in dieser Ringnut (20) des Steckerschaftes (6) vormontiert ist, wobei zur Selbstzentrierung drei Anlagepunkte (X) zwischen dem Innenumfang der Formfederklammer (24) und dem Boden der Steckerschaft-Ringnut (20) vorgesehen sind, und daß der die zwei Federarme (30,32) verbindende Ringbereich der Formfederklammer (24) derart zur Bildung eines Federgelenks (28) verjüngt ist, daß beim Steckvorgang die beiden Federarme (30,32) im wesentlichen ohne eigene Verformung unter elastischer Verformung im Bereich des Federgelenks (28) bewegt werden, wobei jeder Federarm (30,32) eine kreisbogenförmige, der Steckerschaft-Ringnut (20) bezüglich deren Innen- und Außendurchmesser im wesentlichen entsprechende Innen- und Außenkontur besitzt, und wobei die Formfederklammer (24) in ihrem beim Steckvorgang radial nach innen in die Steckerschaft-Ringnut (20) hinein elastisch verformten Zustand im Längs- und Querschnitt gesehen zumindest annähernd der Längs- und Querschnittskontur der Ringnut (20) entspricht, so daß die Formfederklammer (24) beim Steckvorgang die Ringnut (20) zumindest über zwei diametral gegenüberliegende Umfangsbereiche von jeweils etwa 120° bis 160°, also insgesamt zumindest etwa 240° bis 320° des Gesamtumfangs von 360°, hinweg ausfüllt.

2. Steckverbinder nach Anspruch 1,
**dadurch gekennzeichnet**, daß jeder Federarm (30,32) der Formfederklammer (24) in seinem freien Endbereich zwei durch eine sich etwa in Umfangsrichtung in den Federarm (30,32) erstreckende, axial durchgehende Schlitzausnehmung (36) gebildete, radialelastisch verformbare Federzungen (38, 40) aufweist.

3. Steckverbinder nach Anspruch 1 oder 2,
**dadurch gekennzeichnet**, daß von den drei Anlagepunkten (X) zwischen der Formfederklammer (24) und dem Boden der Ringnut (20) ein erster Anlagepunkt (X) im Bereich des Federgelenkes (28) und jeweils ein weiterer Anlagepunkt (X) im freien Endbereich jedes Federarmes (30, 32), vorzugsweise jeweils im Bereich der radial inneren Federzunge (38), gebildet ist.

4. Steckverbinder nach einem der Ansprüche 1 bis 3, **dadurch gekennzeichnet**, daß beim Steckvorgang die Formfederklammer (24) einerseits eine im wesentlichen kreisförmige Innenkontur (42) aufweist, deren Durchmesser (D₁) zumindest annähernd gleich dem Durchmesser (D₂) des Bodens der Steckerschaft-Ringnut (20) ist, sowie andererseits eine im wesentlichen kreisförmige Außenkontur (44) besitzt, deren Durchmesser (D₃) zumindest annähernd gleich dem Innendurchmesser (D₄) der Muffenteil-Aufnahmeöffnung (10) ist.

5. Steckverbinder nach einem der Ansprüche 1 bis 4, **dadurch gekennzeichnet**, daß die Formfederklammer (24) als einstückiges Formteil aus Kunststoff, insbesondere aus POM, gebildet ist.

## Claims

1. Push-in coupling for pressure-line systems, consisting of two coupling parts, specifically a plug part (2) and a socket part (4), in which arrangement the plug part (2) can be inserted with its plug shank (6) in a sealing manner into a location opening (10) of the socket part (4) and can be locked in the location opening (10) via an essentially annular retaining element (18), which is deformable in a radially elastic manner, the retaining element (18), before the push-in operation, being fitted beforehand in a first annular groove (20) of one of the coupling parts (2) in such a way that it is displaced during the push-in operation into this first annular groove (20) by radially elastic deformation and then springs back into a locking position, in which it also engages zonally in a second annular groove (22) of the other coupling part (4), the retaining element (18) being designed as a moulded spring clip (24) having two spring arms (30, 32), which are separated at the end via a slot (26) and are connected via an annular region diametrically opposite the slot (26), and the moulded spring clip (24) being fitted beforehand in the first annular groove (20) in a self-centring manner, for which purpose three-point contact (X) is provided at the base of the annular groove (20), characterized in that the first annular groove is formed by an outer annular groove (20) of the plug shank (6), and the moulded spring clip (24) is fitted beforehand in this annular groove (20) of the plug shank (6), three contact points (X) being provided between the inner periphery of the moulded spring clip (24) and the base of the plug-shank annular groove (20) in order to provide the self-centring, and in that, in order to form a spring joint (28), that annular region of the moulded spring clip (24) which connects the two spring arms (30, 32) is narrowed in such a way that, during the push-in operation, the two spring arms (30, 32) are moved essentially without inherent deformation while being elastically deformed in the region of the spring joint (28), each spring arm (30, 32) having a circular-arc-shaped inner and outer contour, which essentially correspond to the plug-shank annular groove (20) with regard to its inside and outside diameter, and the moulded spring clip (24), as viewed in longitudinal section and cross-section, in the state in which it is elastically deformed radially inwards into the plug-shank annular groove (20) during the push-in operation, corresponding at least approximately to the longitudinal- and cross-sectional contour of the annular groove (20), so that the moulded spring clip (24), during the push-in operation, fills the annular groove (20) at least over two diametrically opposite peripheral regions of in each case about 120° to 160°, that is, over a total of at least about 240° to 320° of the entire periphery of 360°.

2. Push-in connector according to Claim 1, characterized in that each spring arm (30, 32) of the moulded spring clip (24) has in its free end region two spring tongues (38, 40), which are deformable in a radially elastic manner and arc formed by an axially continuous slot recess (36), which extends approximately in the peripheral direction into the spring arm (30, 32).

3. Push-in connector according to Claim 1 or 2, characterized in that, of the three contact points (X) between the moulded spring clip (24) and the base of the annular groove (20), a first contact point (X) is formed in the region of the spring joint (28), and in each case a further contact point (X) is formed in the free end region of each spring arm (30, 32), preferably in each case in the region of the radially inner spring tongue (38).

4. Push-in connector according to one of Claims 1 to 3, characterized in that, during the push-in operation, the moulded spring clip (24) has, on the one hand, an essentially circular inner contour (42), the diameter (D₁) of which is at least approximately equal to the diameter (D₂) of the base of the plug-shank annular groove (20), and, on the other hand, an essentially circular outer contour (44), the diameter (D₃) of which is at least approximately equal to the inside diameter (D₄) of the socket-part location opening (10).

5. Push-in connector according to one of Claims 1 to 4, characterized in that the moulded spring clip (24) is formed as a one-piece moulded part of plastic, in particular polymethylene oxide.

## Revendications

1. Connecteur à fiche pour systèmes de conduite sous pression, comprenant deux éléments d'accouplement, à savoir un élément de fiche (2), et un élément de manchon (4), la tige (6) de l'élément de fiche (2) pouvant être enfichée avec étanchéité dans l'ouverture d'accueil (10) de l'élément de manchon (4), et être bloquée dans ladite ouverture (10) au moyen d'un élément de maintien (18) sensiblement annulaire déformable élastiquement dans la direction radiale. l'élément de maintien (18) étant prémonté avant le processus d'enfichage, dans une première rainure annulaire (20) de l'un des éléments d'accouplement (2), de manière à être poussé dans ladite première rainure annulaire (20) lors de l'enfichage, par déformation élastique dans la direction radiale, et reprenant ensuite élastiquement sa forme pour se bloquer dans une position d'arrêt dans laquelle certaines de ses régions s'insèrent également dans une deuxième rainure annulaire (22) de l'autre élément d'accouplement (4), l'élément de maintien (18) ayant la forme d'une pince élastique moulée (24) comportant deux bras élastiques (30, 32) dont les extrémités sont séparées par une fente (26), et qui sont reliés entre eux par une région annulaire diamétralement en regard de ladite fente (26), la pince élastique moulée (24) étant pré-montée de manière autocentrée dans la première rainure annulaire (20), une application en trois points (X) sur la base de la rainure annulaire (20) étant prévue à cet effet, caractérisé en ce que la première rainure annulaire est formée par une rainure annulaire externe (20) de la tige de fiche (6), et que la pince élastique moulée (24) est pré-montée dans cette rainure annulaire (20) de la tige de fiche (6), trois points d'application (X) pour un autocentrage étant prévus entre la périphérie interne de la pince élastique moulée (24) et la base de la rainure annulaire (20) de la tige de fiche, et en ce que la région annulaire de la pince élastique moulée (24) qui relie les deux bras élastiques (30, 32) s'amincit pour former une articulation élastique (28),de manière à ce que lors du processus d'enfichage, les deux bras élastiques (30, 32) soient mobiles grâce à une déformation élastique dans la région de l'articulation élastique (28) sensiblement sans se déformer eux-mêmes, chaque bras élastique (30, 32) présentant un contour interne et externe en arc de cercle, correspondant sensiblement au diamètre interne et externe de la rainure annulaire (20) de la tige de fiche, la pince élastique moulée (24) correspondant, en coupe longitudinale et transversale, au moins approximativement au contour en coupe longitudinale et transversale de la rainure annulaire (20) lorsque, au cours de l'enfichage, elle est déformée élastiquement radialement vers l'intérieur de la rainure annulaire (20) de la tige de fiche, la pince élastique moulée (24) remplissant au cours de l'enfichage la rainure annulaire (20) au moins en ce qui concerne deux régions périphériques diamétralement en regard de 120° à 160° chacune, donc ensemble de 240° à 320° environ de la périphérie totale de 360°.

2. Connecteur à fiche selon la revendication 1,
caractérisé en ce que chaque bras élastique (30, 32) de la pince élastique moulée (24) présente dans sa région terminale libre deux languettes élastiques (38, 40) formées par un évidement en forme de fente (36) s'étendant dans le bras (30, 32) sensiblement dans la direction périphérique.

3. Connecteur à fiche selon la revendication 1 ou 2,
caractérisé en ce qu'un premier point d'application (X) des trois points (X) prévus est formé entre la pince élastique moulée (24) et la base de la rainure annulaire (20), dans la région de l'articulation élastique (28), et un autre point d'application respectif (X), dans la région de l'extrémité libre de chaque bras élastique (30, 32), de préférence respectivement dans la région de la languette élastique (38) radialement interne.

4. Connecteur à fiche selon l'une des revendications 1 à 3,
caractérisé en ce que, au cours de l'enfichage, la pince élastique moulée (24) présente d'une part un contour interne (42) sensiblement circulaire dont le diamètre (D₁) est au moins sensiblement égal au diamètre (D₂) de la base de la rainure annulaire (20) de la tige de fiche, et d'autre part, un contour externe (44) sensiblement circulaire dont le diamètre (D₃) est au moins sensiblement égal au diamètre interne (D₄) de l'ouverture de l'élément de manchon (10).

5. Connecteur à fiche selon l'une des revendications 1 à 4,
caractérisé en ce que la pince élastique moulée (24) a la forme d'un élément moulé d'une pièce en une matière synthétique, en particulier en polyoxyméthylène.
